# FASCICULE DE BREVET EUROPEEN

(11) **EP 1 142 620 B1**
(45) Date de publication et mention de la délivrance du brevet: **07.07.2004**
(21) Numéro de dépôt: 01111746.2
(22) Date de dépôt: 13.04.1995
(51) Int. Cl.: B01D 45/02, B01D 45/08

(54) **Procédé d'élimination de particules contenues dans un courant de fluide**
Verfahren zur Entfernung von Teilchen aus einem Fluidstrom
Method for removing particles from a fluid stream

(30) Priorité: 14.04.1994 GB 9407441; 20.03.1995 US 406393
(43) Date de publication de la demande: 10.10.2001
(62) Demande divisionnaire de: 95917398.0
(73) Titulaire: Dullien, Francis A. L., Drumbo, Ontario N0J 1G0 (CA); Institut Français du Pétrole, 92852 Rueil-Malmaison Cedex (FR)
(72) Inventeur: Dullien, Francis A.L., Drumbo, Ontario N0J 1G0 (CA); Viltard, Jean-Charles, 38200 Vienne (FR)
(74) Mandataire: Coadour, Jean

(56) Documents cités:
- EP-A- 0 379 032
- WO-A-93/15822
- DE-A- 3 731 766
- US-A- 3 616 623

## Description

La présente invention concerne l'élimination de fines particules contenues dans des gaz. La présente invention facilite en particulier la séparation et la récupération de particules telles que poussières, brouillard, vapeurs, fumée, ainsi que des gaz nocifs, etc, dispersés dans un gaz présentant un régime d'écoulement turbulent, en profitant de certains effets liés à la turbulence de manière spécifique et nouvelle et en utilisant des moyens purement mécaniques.

Dans le document US 3616623, il est décrit un séparateur de brouillard comportant un logement avec une multiplicité d'aubes verticales de manière à former, entre deux aubes successives, un passage pour un courant de fluide. Les aubes sont recouvertes sur chacune de leurs faces par un matériau fibreux perméable. Le courant de fluide, ainsi que le liquide qu'il contient, pénètrent dans les passages et percutent les faces du revêtement fibreux des aubes. Les gouttelettes de liquide sont ainsi collectées par ces fibres puis agglomérées avec d'autres gouttelettes déjà présentes dans le matériau poreux pour être ensuite évacuées vers la base du logement.
L'inconvénient majeur d'un tel séparateur réside dans le fait que le courant de fluide est laminaire et le choc des gouttelettes avec le matériau fibreux génère soit un éclatement de ces gouttelettes en une multitude d'autres gouttelettes qui sont réintroduites dans le courant de fluide, soit un rebond des gouttelettes sur le matériau fibreux sans que ces dernières ne soit collectées par les fibres de ce matériau.

Il est connu des spécialistes de la mécanique des fluides et des domaines qui y sont liés que les fines particules dispersées dans un fluide présentant un écoulement turbulent ont tendance à suivre les tourbillons du fluide turbulent.

La séparation de très fines particules présentant une taille comprise entre 0,01 et 100 microns et contenues dans des gaz industriels ou dans l'air ambiant représente une opération complexe et coûteuse. Les dispositifs habituellement utilisés à cet effet comprennent des dépoussiéreurs électriques, différents filtres et des dépoussiéreurs humides. On utilise également des laveurs pour éliminer les gaz nocifs contenus dans les gaz industriels. Des collecteurs à cyclone sont employés de manière traditionnelle pour éliminer les particules présentant une taille supérieure à environ 5 microns, et des efforts concertés ont été récemment mis en oeuvre afin d'étendre leur efficacité à des particules d'une taille d'environ 1 micron.

La demande de brevet international publiée sous le n° WO93/15.822 décrit une méthode permettant d'éliminer de fines particules dispersées dans un courant de fluide en utilisant l'effet de mélange de la turbulence pour séparer et récupérer les fines particules d'une manière spécifique et nouvelle, en faisant passer le courant de fluide présentant un écoulement turbulent à travers un canal présentant un volume intérieur libre, le long duquel est aménagée une zone communiquant librement avec le canal d'écoulement, dans laquelle l'écoulement est entravé par un grand nombre d'objets proches les uns des autres au sein de la veine d'écoulement, qui provoquent la transformation de l'écoulement turbulent en un écoulement visqueux. Des remous turbulents transportant les particules pénètrent continuellement dans cette zone, qui forme une couche sous-jacente visqueuse dilatée, et déposent les particules à surface des objets présents dans cette zone. La rétention des particules à la surface des objets est améliorée si ces objets sont chargés d'électricité statique. On appellera "dépoussiéreurs d'écoulement turbulent" les dispositifs fonctionnant selon le principe décrit ci-dessus de récupération des particules contenues dans des courants de fluide.

La présente invention divulgue une méthode selon la revendication 1. Dans tous les modes de réalisation, le mécanisme de récupération des poussières est le même, à savoir un dépôt turbulent par pénétration de tourbillons. La présente demande de brevet s'applique à tous les modes de réalisation décrits ici, et aux futures modifications qui leur seront apportées, qui sont basés sur ce principe. Certains moyens de récupération ou d'élimination des poussières recueillies sont décrits ici, mais ils ne constituent en aucune façon la seule méthode d'élimination des poussières recueillies. Certains se basent sur des moyens purement physiques (utilisant la gravité) et d'autres reposent sur des moyens mécaniques (tels que base à claire-voie, transporteur à vis, bande transporteuse, mécanisme à secousses, agitation à retour rapide, etc.). Certains modes de réalisation sont utiles pour des applications à petite échelle (jusqu'à 500 acfm), certains sont destinés à des applications de taille moyenne (jusqu'à 5000 acfm) et d'autres peuvent être modifiés en vue d'être appliqués à des unités industrielles de grande échelle, mais tous reposent sur le même principe de base, celui du dépôt turbulent tel qu'il est décrit ici et dans la demande de brevet WO93/15.822 ainsi que dans le dépôt GB 9407441.6. Un grand nombre des modes de réalisation décrits peut être utilisé, en plus de l'élimination de particules, pour éliminer des gaz nocifs soit par l'imprégnation de la surface collectrice avec un catalyseur adapté ou un adsorbant tel que du charbon actif, soit par une fine pulvérisation d'eau ou d'une solution aqueuse adaptée que l'on injecte dans le courant de gaz turbulent avant le dispositif collecteur. Dans le premier cas, les tourbillons transportent continuellement le gaz nocif jusqu'à la surface collectrice où il réagit ou est adsorbé. Dans le second cas, le jet fin pulvérisé est précipité par dépôt turbulent après avoir absorbé le gaz nocif. Dans ce cas, le dépoussiéreur d'écoulement turbulent fonctionne comme un dépoussiéreur humide. Le criblage à sec constitue un autre champ d'application du dépoussiéreur d'écoulement turbulent; il peut être utilisé pour récupérer les particules sèches formées au cours du processus. Certains moyens additionnels permettant la récupération des particules sont décrits ci-dessous en référence aux figures annexées suivant lesquelles :
- la figure 1 est une vue de face d'une plaque disposée dans un logement et utilisée dans de premiers moyens additionnels,
- la figure 2 comporte une élévation latérale présentant des vues écorchées : fig. 2a d'un dépoussiéreur de courant turbulent conformément à de seconds moyens additionnels, le mécanisme à retour rapide fig.2b est une vue de face fig 2c d'une plaque de criblage et un plateau de dépoussiérage disposé dans le logement,
- la figure 3 est une vue latérale d'un dépoussiéreur de courant turbulent selon un mode de réalisation de troisièmes moyens additionnels,
- la figure 4 est une vue de face présentant des vues écorchées d'un dépoussiéreur de courant turbulent selon un second mode de réalisation des troisièmes moyens additionnels,
- la figure 5a est une vue latérale présentant des vues écorchées (a) d'un dépoussiéreur selon un troisième mode de réalisation
- la figure 5b est une section transversale d'un dépoussiéreur de courant turbulent selon un troisième mode de réalisation des troisièmes moyens additionnels,
- la figure 6 est une vue en perspective présentant des vues écorchées (a) et une coupe transversale perpendiculaire à l'axe principal (b) d'un dépoussiéreur de courant turbulent selon un quatrième mode de réalisation des troisièmes moyens additionnels,
- la figure 7 présente deux vues en perspective d'un dépoussiéreur de courant turbulent selon un cinquième mode de réalisation des troisièmes moyens additionnels, l'une (7a) comportant des vues écorchées, et l'autre (7b) représentant l'emplacement de sections : une coupe transversale le long de l'axe principal fig. 7c et deux coupes transversales perpendiculaires à l'axe principal : fig. 7d et fig. 7e,
- la figure 8 présente une vue en perspective comportant des vues écorchées fig. 8a et une coupe horizontale fig. 8b d'un dépoussiéreur de courant turbulent selon un sixième mode de réalisation des troisièmes moyens additionnels, et
- la figure 9 présente une vue en perspective comportant des vues écorchées d'un dépoussiéreur de courant turbulent selon un septième mode de réalisation des troisièmes moyens additionnels.

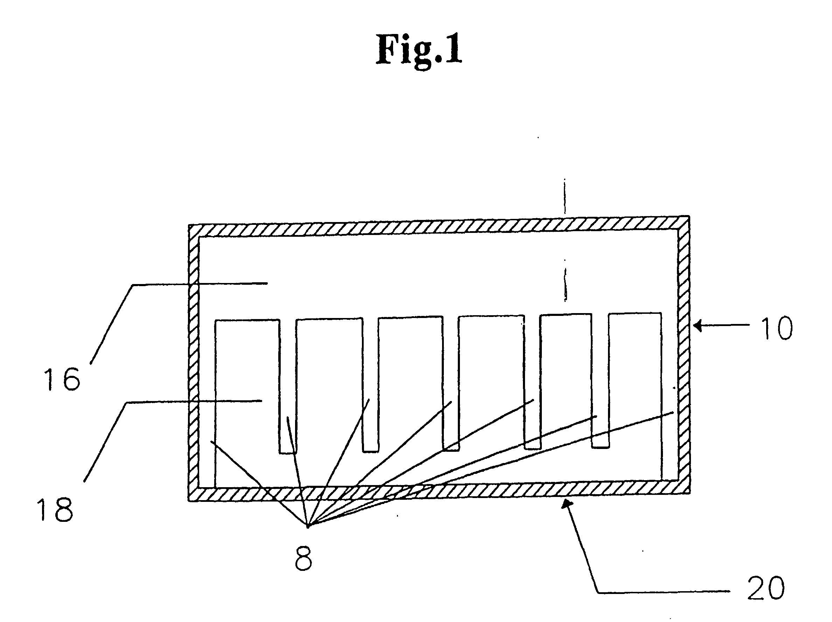

### 1 - Premiers moyens additionnels, figure 1

Dans des premiers moyens additionnels représentés sur la figure 1, il est possible de placer un nombre relativement élevé de plaques 18 les unes derrière les autres transversalement dans le logement 10, soit en les posant sur le fond du logement, comme il est décrit dans le document WO93/15.822, soit en laissant un espace entre le fond 20 du logement 10 et les bords inférieurs des plaques 18. Le gaz s'écoule dans le canal 16 sous la forme d'un écoulement turbulent. Certaines ou toutes les plaques comportent une pluralité de fentes 8 alignées les unes derrière les autres, formant des espaces, que l'on peut désigner par le terme de "canyons", et qui traversent l'ensemble des plaques 18. La largeur de chacune de ces fentes ou canyons est variable mais elle est de préférence comprise entre environ 3 mm et 10 mm. Les espaces entre les fentes ou canyons pratiqués dans les plaques sont également variables, mais ils sont compris de préférence entre environ 1 cm et environ 30 cm. Lors d'essais réalisés sur des poussières d'essai ASP 200 dispersées avec un diamètre moyen des particules de 1,8 µm, un logement 10 d'une largeur de 61 cm, un canal 16 d'écoulement du gaz d'une hauteur de 5 cm, un espacement des plaques de 4 cm, une hauteur de plaques de 15 cm, une vitesse du gaz comprise entre 12 ms⁻¹ et 18 ms⁻¹, un dépoussiéreur d'une longueur de 3,4 m, le rendement de récupération avec des plaques exemptes de "canyons" s'élevait à 48 %, tandis qu'avec des plaques munies de 13 "canyons" de 3 mm de largeur, le rendement passait à 62 %.

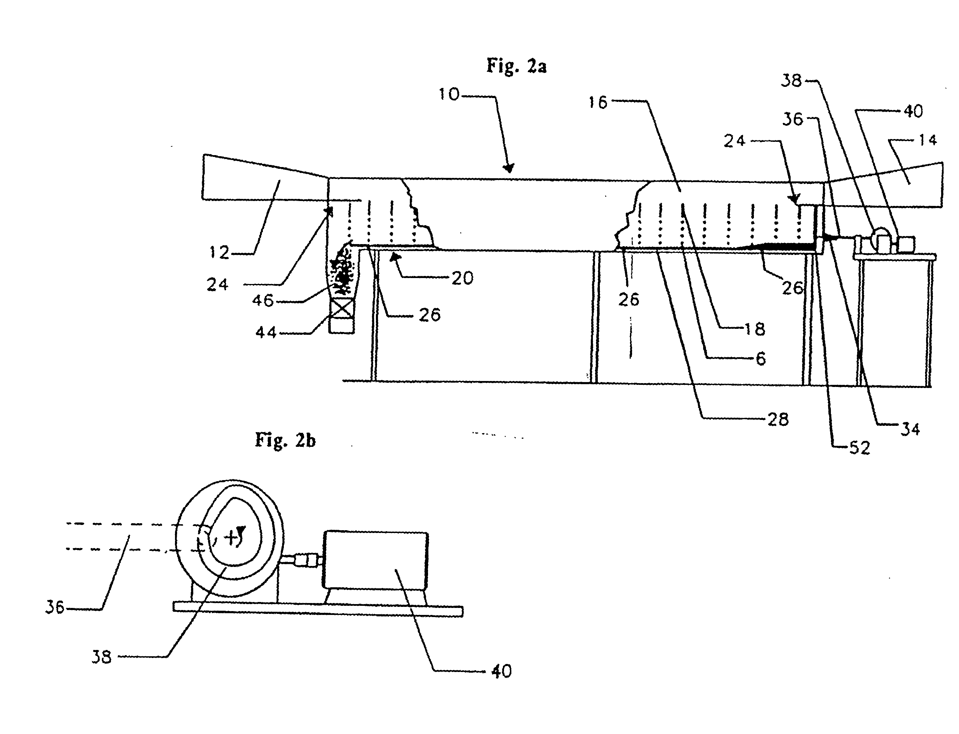

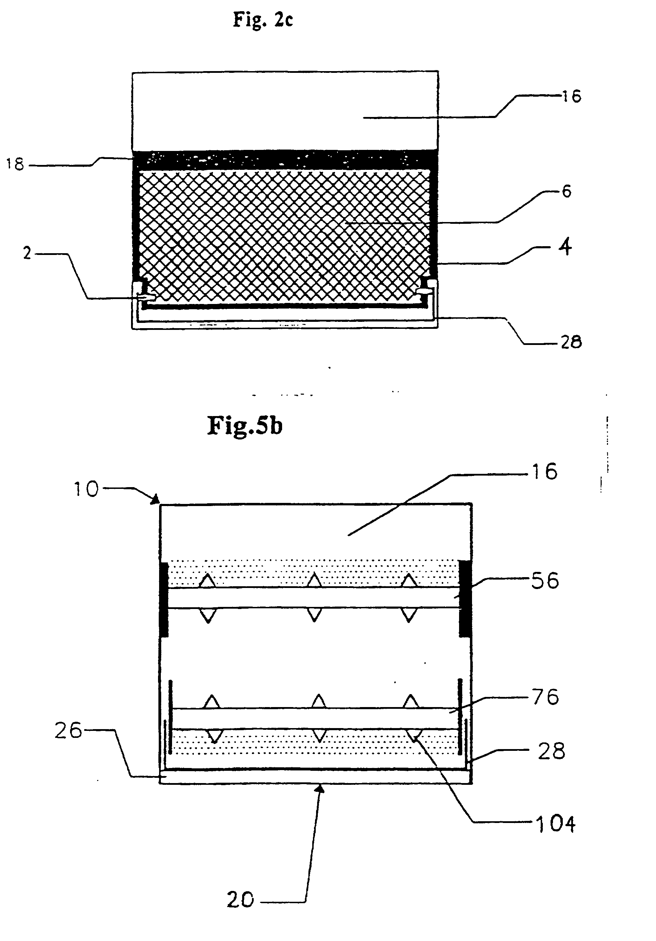

### 2 - Seconds moyens additionnels, figure 2

Dans de seconds moyens destinés à effectuer la séparation de particules, illustrés par la figure 2, on peut utiliser, au lieu de la pluralité de plaques transversales rapprochées décrites dans le document WO93/15.822, un nombre relativement élevé de tamis à mailles 6, chacun étant soutenu par un châssis 4, disposés les uns derrière les autres, et présentant un espace d'environ 0,5 cm à 2 cm entre le fond du plateau de dépoussiérage 28 reposant sur des coulisseaux 26 fixés au fond du conduit, et le bord inférieur d'un tamis. Des chevilles 2 destinées à venir frapper les tamis sont fixées aux côtés du plateau 28. Selon une variante préférée, une bande de métal 18 d'une largeur comprise entre environ 1 cm et 4 cm peut être placée sur le bord supérieur de chaque tamis en remplacement de celui-ci. Les tamis peuvent être espacés d'un intervalle quelconque compris de préférence entre environ 0,5 cm et environ 5 cm; ils peuvent être réalisés en fibres, en filaments ou en fils métalliques d'un diamètre compris de préférence entre environ 0,1 mm et environ 1 mm. La dimension des mailles du tamis peut varier largement mais elle sera de préférence comprise entre environ 1 mm et environ 10 mm. Cette disposition est analogue à celle décrite dans le document W093/15.822. Le gaz chargé de poussières pénètre dans le logement 10 par l'entrée 12, il s'écoule à travers le canal 16 et le gaz purifié est évacué par la sortie 14. L'entrée et la sortie comportent un rebord 24. Les fines particules sont entraînées par les tourbillons dûs au gaz qui s'écoule à travers le passage libre au-dessus des tamis vers la zone occupée par les tamis, où les tourbillons déclinent et les poussières se déposent sur les mailles des tamis (et sur les bandes de métal placées sur les bords supérieurs des tamis) puis, après la formation d'un dépôt d'une épaisseur suffisante, les particules déposées tombent dans le fond du dispositif. Le plateau de dépoussiérage 28 est fixé à une lourde plaque d'acier 52 qui est agitée avec une amplitude d'environ 1 cm à 3 cm et à une fréquence d'environ 2 Hz, via l'arbre 36, par une came à retour rapide 38, au moyen d'un soufflet 34, ou de tout autre moyen adapté à cet effet, servant d'organe d'étanchéité pour l'arbre d'entraînement 36, et la came 38 est entraînée par un moteur 40. Le rapport de vitesses d'un aller-retour s'élève à environ 2 ou 3, les poussières recueillies sur le plateau étant envoyées dans la trémie 46 tandis que les poussières continuent à être recueillies sans interruption. La trémie est vidée au moyen de la vanne rotative 44. Comme on peut le voir sur la figure 2, l'aller s'effectue de droite à gauche. Une autre possibilité consiste à placer la trémie-46 à l'extrémité opposée du logement 10, où le gaz purifié quitte l'installation par la sortie 14, au lieu de la placer du côté de l'entrée 12. Toutefois, l'aller se fera dans ce cas de gauche à droite. L'utilisation de tamis au lieu de plaques est avantageuse car elle permet d'augmenter la surface accessible aux fines particules à recueillir, ce qui permet d'accroître le rendement de récupération des particules. L'élimination des poussières recueillies au fond de l'installation par agitation au moyen d'un mécanisme à retour rapide peut également être mise en oeuvre lors de l'emploi de plaques, que celles-ci soient exemptes de "canyons" comme il est décrit dans le document WO93/15.822 ou munies de fentes telles que celles employées dans les premiers nouveaux moyens de la présente invention.

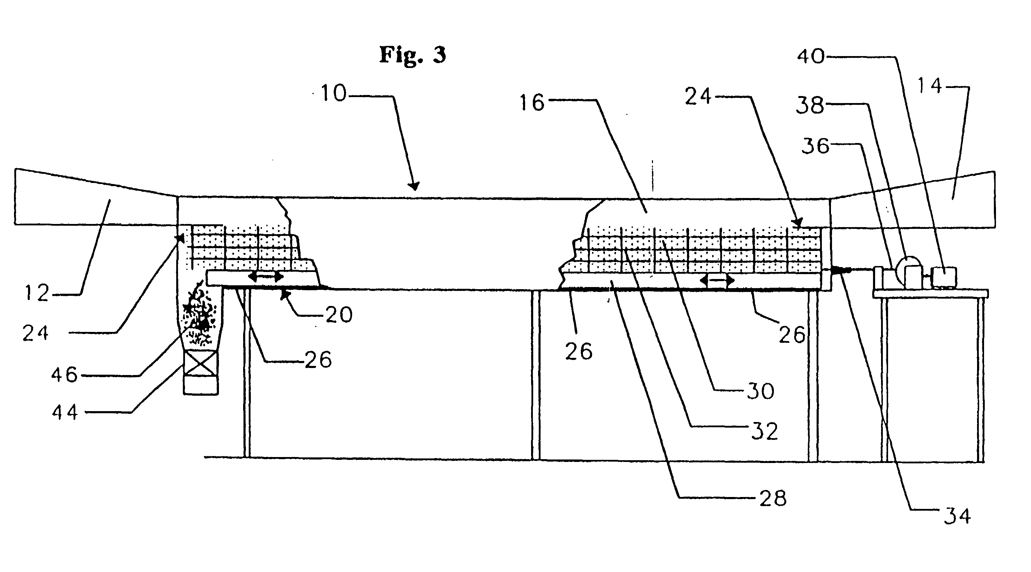

### 3 - Troisièmes moyens additionnels, figures 3, 4, 5, 6, 7, 8, 9

Dans de troisièmes moyens additionnels destinés à la séparation de particules, on emploie, au lieu de la pluralité de plaques transversales rapprochées ou de tamis, un tapis fait d'un tissu fibreux ou mat disposé le long de l'écoulement gazeux turbulent dans le dispositif. Le tissu fibreux peut être à base de fibres de polyester, de verre, de métal ou de céramique, et il présente une porosité (taux de vide) comprise de préférence entre environ 0,90 et environ 0,999; ses fibres présentent un diamètre compris entre environ 0,001 mm et environ 0,1 mm afin de disposer d'un espace moyen d'environ 0,5 mm à 2 mm entre deux fibres voisines. Les fibres du mat peuvent être chargées d'électricité statique et/ou le mat peut être plissé. L'épaisseur du mat peut être comprise entre environ 1 cm et environ 30 cm. Cette nouvelle réalisation de l'invention est similaire dans une certaine mesure aux second moyens additionnels décrits dans le présent document, mais elle permet d'utiliser des fibres collectrices beaucoup plus fines, ce qui permet d'obtenir des surfaces collectrices plus importantes que celles disponibles avec les tamis; elle offre en outre certains avantages en matière de construction et de fabrication. Le gaz présent dans les mats de porosité élevée forme une couche limite visqueuse dilatée dans laquelle pénètrent des tourbillons issus du courant de gaz turbulent et transportant des particules en suspension. Les particules sont capturées par les fibres par tous les mécanismes de récupération connus. Alors que dans les filtres conventionnels, on fait entrer le gaz par un côté du milieu filtrant pour le faire ressortir de l'autre côté, ce qui entraîne une perte de pression élevée et un bouchage progressif du milieu, dans la présente invention, la majeure partie du gaz s'écoule le long du mat poreux dans un canal ouvert, ce qui assure un rendement de récupération des particules élevé avec un débit stable, ainsi qu'une perte de pression qui reste à un niveau constamment bas et une vitesse de gaz élevée.

**3 a)** Dans le mode de réalisation des troisièmes moyens additionnels présenté sur la figure 3, le dépoussiéreur d'écoulement turbulent comporte un logement 10, une entrée 12 pour le gaz chargé de fines particules et une sortie 14 pour le gaz purifié, disposé sur un axe généralement horizontal et muni de rebords 24. A l'intérieur du logement 10, le gaz s'écoule à travers le passage 16 au-dessous duquel se trouve un tapis constitué d'un matelas fibreux 30, maintenu par une cage en fils métalliques 32, fixé à un plateau de dépoussiérage 28 qui est agité par intermittences ou en continu au moyen du mécanisme à retour rapide décrit dans le cadre du mode de réalisation illustré par la figure 2 et constitué de l'arbre d'entraînement 36, du soufflet 34 ou d'un autre moyen d'étanchéité adapté, de la came à retour rapide 38 et du moteur 40. Au cours d'essais réalisés avec un matelas de fibres de verre d'une épaisseur de 10 cm ou 15 cm et d'une porosité de 99,5 %, formé de fibres d'un diamètre d'environ 30 µm, lesdits essais étant conduits dans les mêmes conditions que celles décrites pour les premiers moyens additionnels, le rendement de récupération a pu être élevé à 70 %. Ce mode de réalisation présente d'autres avantages tels que la possibilité d'éliminer du dispositif, de manière continue, les poussières déjà recueillies, ainsi que le coût et le poids très inférieurs du matelas par rapport aux plaques.

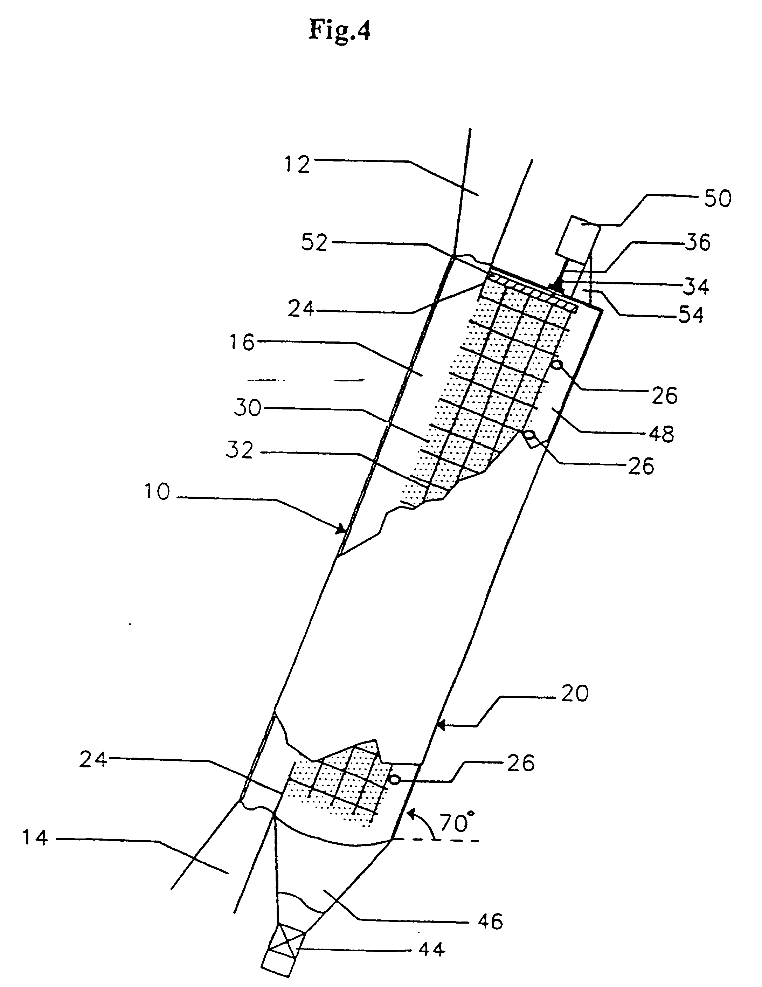

**3 b)** Le mode de réalisation présenté sur la figure 4 présente de grandes similitudes avec le mode de réalisation illustré par la figure 3. Il comporte un logement 10 similaire avec une entrée 12 et une sortie 14 destinées au gaz, des rebords 24, mais il est disposé sur un axe orienté à environ 70 degrés par rapport à l'horizontale. Le gaz s'écoule à travers le canal 16, sous lequel se trouve un tapis fibreux 30, maintenu par une cage en fils métalliques 32 soudée à une lourde plaque d'acier 52, qui est agitée au moyen d'un arbre d'entraînement 36 actionné par un mécanisme à secousses 50, monté sur un support 54 et fonctionnant avec des amplitudes et à des fréquences similaires à celles décrites à propos du mode de réalisation de la figure 2, mais qui n'est pas nécessairement du type à retour rapide. Le soufflet 34 ou tout autre moyen adapté fait office d'organe d'étanchéité pour l'arbre d'entraînement 36. La cage en fils métalliques glisse sur des coulisseaux 26. Les poussières décrochées des fibres du fait des secousses tombent dans le canal d'évacuation des poussières 48 et glissent sur le fond 20 du logement 10 sous l'effet de la gravité pour tomber dans la trémie 46, d'où elles sont évacuées via la vanne rotative 44.

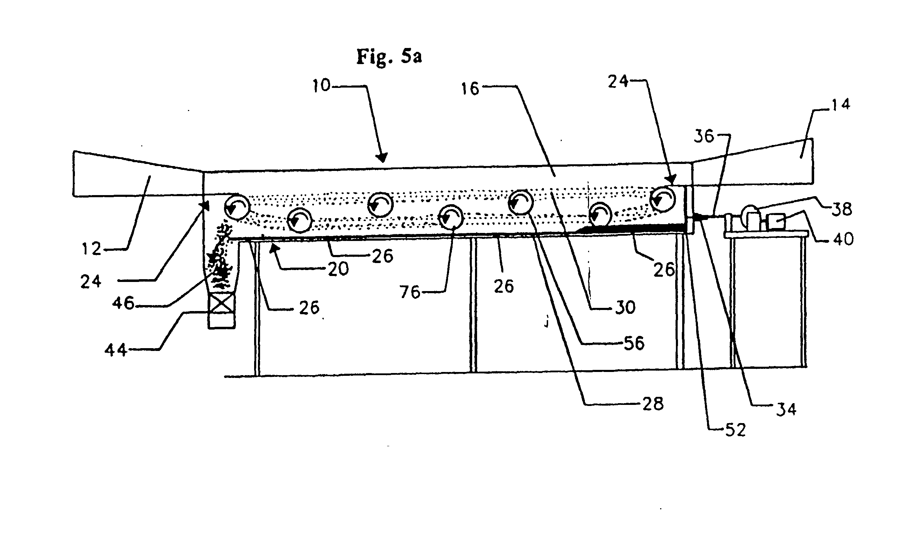

**3 c)** Le troisième mode de réalisation des troisièmes moyens additionnels de l'invention est illustré par les figures 5a et 5b. Le logement 10, l'entrée 12 et la sortie 14, les rebords 24, le canal d'écoulement du gaz 16, le plateau de dépoussiérage 28 auquel est fixée la lourde plaque d'acier 52, les coulisseaux 26, le fond 20, le mécanisme à retour rapide comprenant la came à retour rapide 38, l'arbre d'entraînement 36, le soufflet ou tout autre moyen adapté 34 et le moteur 40, la trémie 46, la vanne rotative 44 sont tous identiques aux composants correspondants du mode de réalisation décrit en référence à la figure 2 de ce document. Dans ce mode de réalisation, le tissu fibreux est utilisé sous la forme d'une bande déplacée à faible vitesse par des arbres 56 équipés de pignons (non référencés). Les poussières sont recueillies par la bande dans le passage supérieur et en sont évacuées par les arbres de dépoussiérage 76, également munis de pignons 104, dans le passage inférieur. Les arbres sont commandés par un moteur (non représenté).

### Dimensions

Les dimensions types propres à tous les modes de réalisation décrits ci-dessus sont les suivantes. La largeur du logement 10 est comprise entre 10 cm et 1 m et s'élève de préférence à environ 50 cm, la hauteur du canal d'écoulement 16 est comprise entre 1 cm et 20 cm et s'élève de préférence à environ 5 cm, l'épaisseur du matelas fibreux 30 est comprise entre 1 cm et 30 cm et s'élève de préférence à environ 10 cm. La longueur du logement dépend de la tâche à accomplir et du rendement de récupération recherché. La vitesse du gaz dans le canal d'écoulement 16 est comprise entre 1 ms⁻¹ et 30 ms⁻¹ et s'élève de préférence à environ 15 ms⁻¹. La came à retour rapide 38 possède un rapport de vitesses aller-retour d'environ 2 à 3, la course est d'environ 2 cm et la fréquence s'élève à environ 2 Hz.

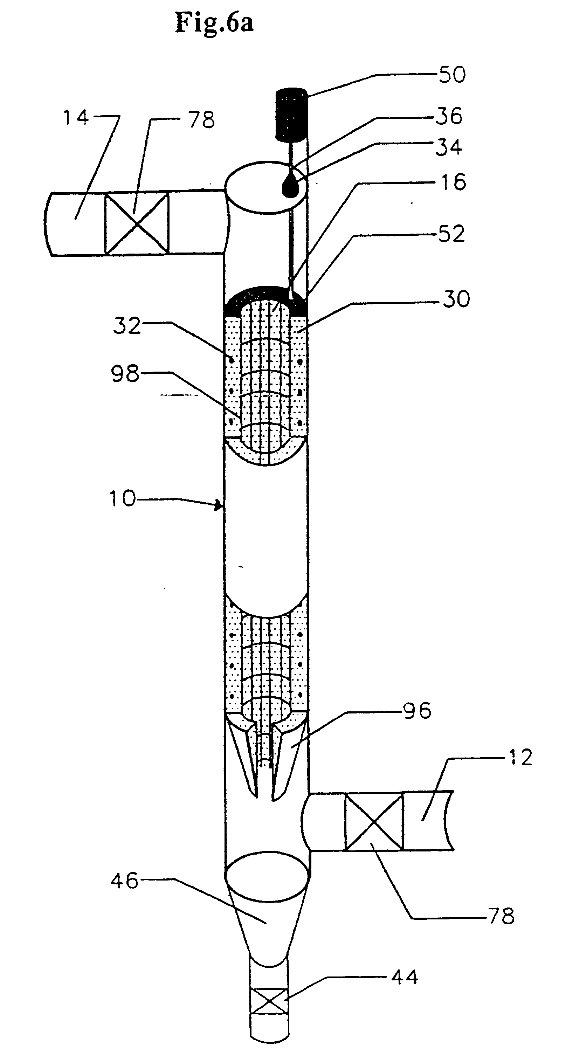

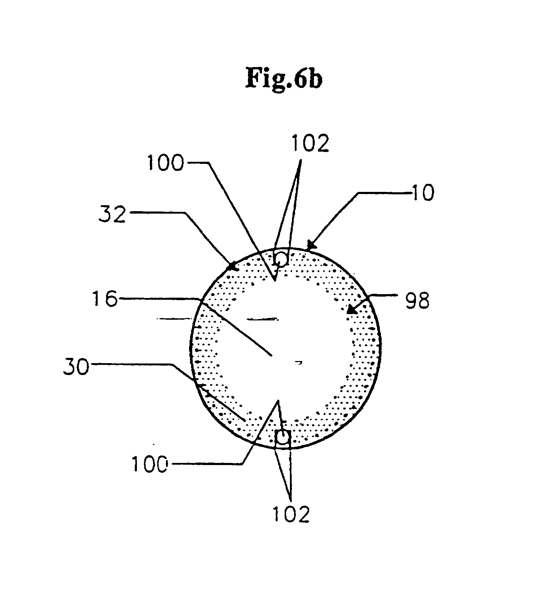

**3 d)** Un quatrième mode de réalisation des troisièmes moyens additionnels de l'invention, dans lequel on utilise des tissus fibreux ou matelas possédant les propriétés décrites ci-avant, est illustré par les figures 6a et 6b. Le logement consiste ici en un tube 10 muni d'une entrée 12 pour le gaz chargé de poussières et d'une sortie 14 pour le gaz purifié équipées de vannes 78. A l'intérieur du tube 10, le tissu fibreux 30 est inséré entre deux tubes concentriques constitués d'une grille de fil métallique moyen ou de fines tiges de métal. Le tube formé par la grille tubulaire interne 98 constitue le canal d'écoulement 16; il est rattaché à la grille tubulaire externe 32 par la plaque de tête renforcée 52. La cage peut se déplacer selon un mouvement ascendant et descendant au sein du logement 10, guidée par deux tiges 100 qui sont fixées solidairement à la grille 32 et qui glissent dans des glissières de guidage 102 fixées à l'intérieur du logement 10, comme le montre la figure 6b. Une plaque conique 96 en forme d'entonnoir relie l'extrémité inférieure de la grille tubulaire externe 32 à l'extrémité inférieure de la grille tubulaire interne 98. La cage, constituée des grilles tubulaires 32 et 98, de la garniture de tissu fibreux 30, de la plaque de tête renforcée 52 et du cône 96, est agitée de manière intermittente selon un mouvement alternatif par le mécanisme 50, qui peut être un mécanisme à retour rapide ou à simple excentrique. L'arbre d'entraînement 36 est rattaché à la plaque renforcée 52 par le soufflet 34 ou par tout autre organe d'étanchéité adapté à cet effet. Les poussières tombent dans la trémie 46 d'où elles peuvent être évacuées par l'intermédiaire de la vanne rotative 44. Le diamètre de la grille tubulaire interne 98 est compris entre 2 cm et 40 cm, de préférence entre environ 10 cm et 20 cm, et l'épaisseur de la garniture de tissu fibreux 30 est comprise entre 2 cm et 15 cm, de préférence entre environ 5 cm et 10 cm; la vitesse d'écoulement du gaz est comprise entre 2 ms⁻¹ et 30 ms⁻¹. La longueur du matelas tubulaire 30 est comprise entre 3 m et 30 m, selon la tâche à accomplir. Dans le cas de débits de gaz importants, comme on en rencontre couramment dans l'industrie, un grand nombre de grilles tubulaires internes est rattaché à une même plaque de tête renforcée, et la batterie de tubes est encastrée dans une grille externe de grande dimension dont le périmètre supérieur est fixé à la plaque de tête. L'espace compris entre les grilles tubulaires internes, la plaque de tête et la grille externe est garni d'un tissu fibreux. Au bas de la garniture fibreuse, sous chaque tube interne, se trouve un cône en forme d'entonnoir dont l'extrémité supérieure est rattachée au fond cannelé de la cage. L'intégralité de la cage glisse à l'intérieur d'un logement et est agitée par intermittences, selon un mouvement alternatif, par un secoueur disposé à l'extrémité supérieure du logement. Les poussières sont envoyées dans une trémie d'où elles sont évacuées par une vanne rotative. Au cours d'essais réalisés avec une couche de 10 cm d'épaisseur d'un matelas de fibres de verre d'une porosité de 99,5 %, constitué de fibres d'un diamètre d'environ 30 µm, le canal tubulaire d'écoulement du gaz 16 ayant un diamètre intérieur de 20 cm, avec un tube d'une longueur de 3 m, la vitesse d'écoulement du gaz étant comprise entre 12 ms⁻¹ et 18 ms⁻¹, on a mesuré un rendement de récupération des poussières d'essai standard ASP 200 de 78 %.

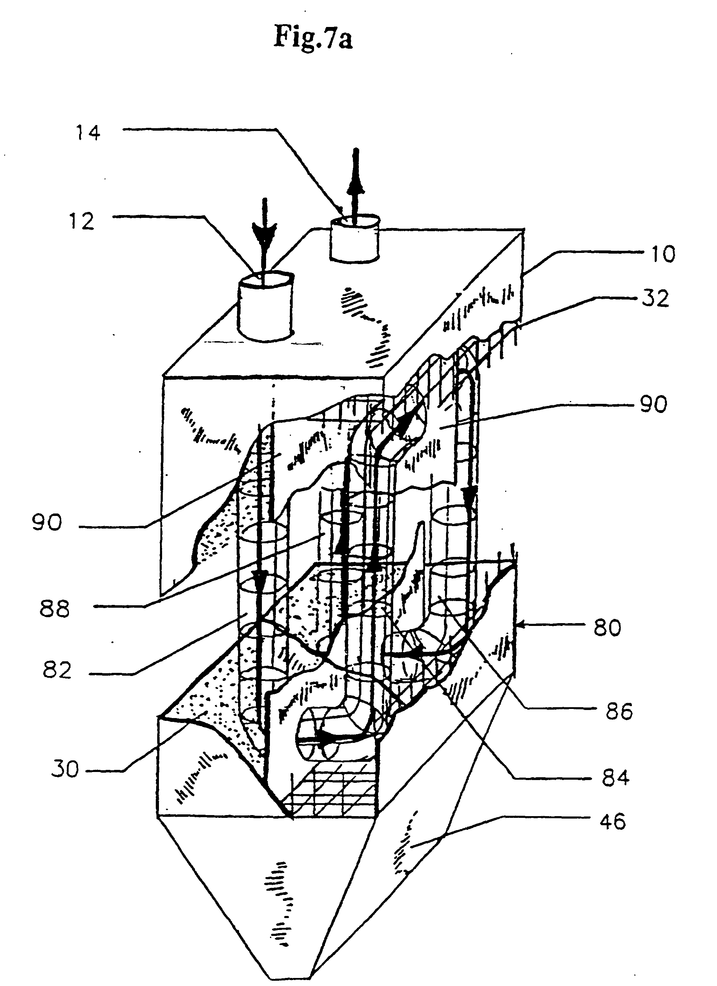

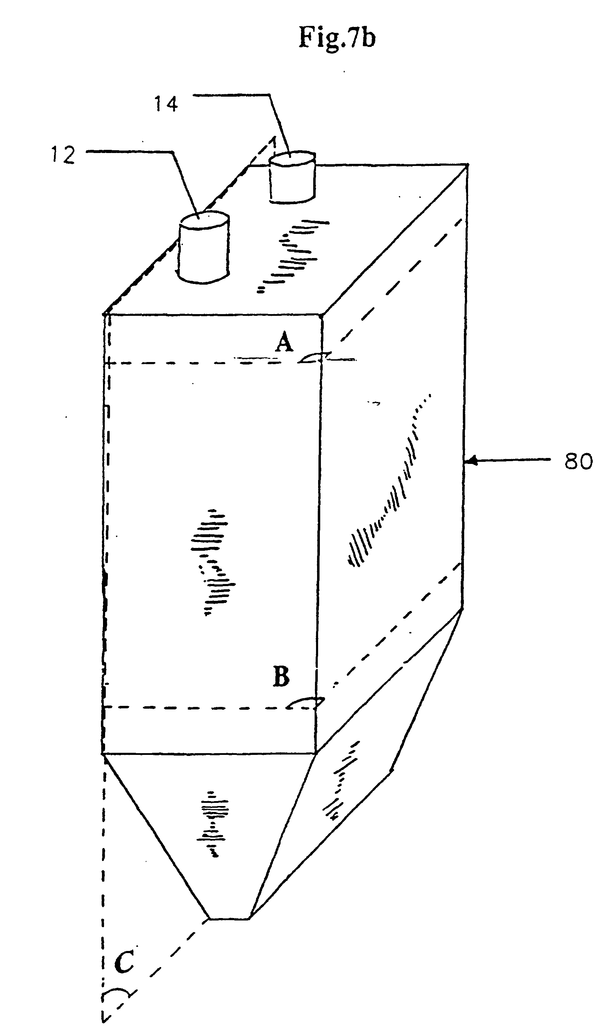

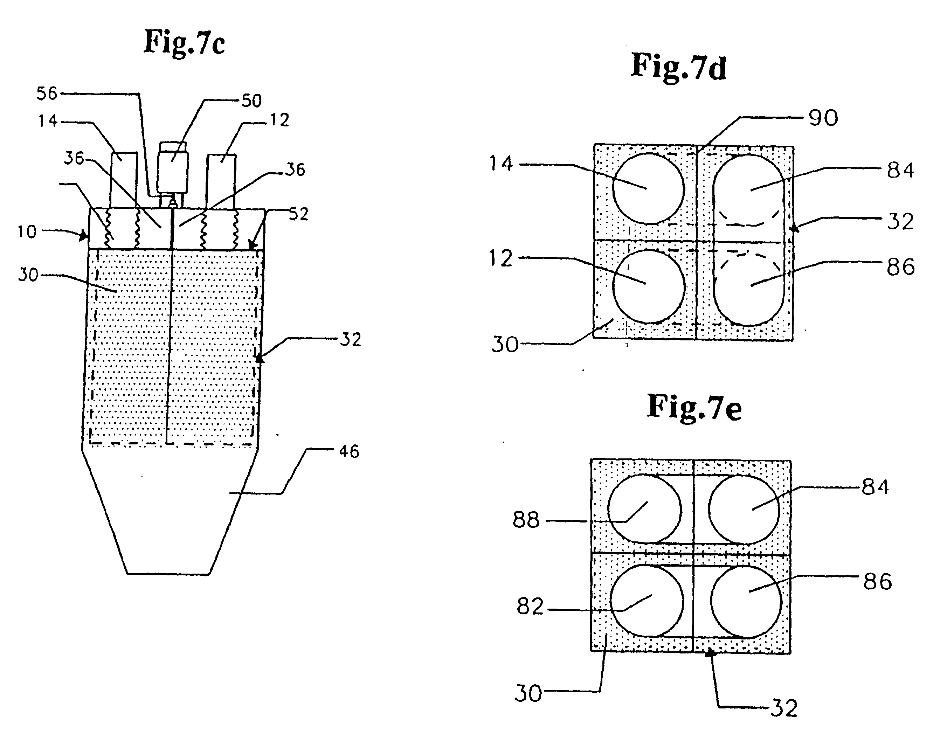

**3 e)** Un cinquième mode de réalisation des troisièmes moyens additionnels de l'invention, comprenant des tissus fibreux ou des mats présentant les propriétés décrites ci-dessus, et illustré par les figures 7a à 7e. Il comporte un logement rectangulaire 10 dans lequel est placée une cage rectangulaire 32 présentant un ajustement libre et séparée en quatre compartiments égaux par des cloisons étanches 90. Le gaz chargé de poussières pénètre, par l'entrée 12, dans un tube constitué d'une grille en fil métallique moyen, d'abord dans le compartiment 82, ensuite dans le compartiment 84, puis dans le compartiment 86, et le gaz purifié quitte finalement le compartiment 88 par la sortie 14. L'espace compris entre la cage et le tube constitué par une grille est garni d'un tissu fibreux. Un flexible 108, présenté sur la coupe de la figure 7c, relie l'entrée 12 et la sortie 14 aux deux extrémités du tube dont la paroi est constituée d'une grille. L'aspect extérieur du boîtier est représenté dans la figure 7b, sur laquelle sont également indiquées les positions des sections. La partie supérieure de la cage est formée d'une plaque de tête renforcée 52 reliée par l'arbre d'entraînement 56 à un secoueur qui permet à la cage d'effectuer un mouvement alternatif ascendant et descendant. Les figures 7d et 7e présentent deux coupes horizontales de l'équipement dont les positions sont indiquées sur la figure 7b. Les poussières tombées des fibres du fait des secousses parviennent dans la trémie 46, d'où elles sont évacuées par différents moyens adaptés tels que, par exemple, un transporteur à vis. Le nombre de compartiments ou de passages n'est pas limité à quatre comme dans ce mode de réalisation ; ils peuvent être aussi nombreux qu'on le jugera nécessaire ou adéquat. Les dimensions choisies dans ce mode de réalisation sont identiques à celles adoptées dans le mode de réalisation précédent illustré par la figure 6. Ce mode de réalisation offre la possibilité d'utiliser un dispositif comportant un canal d'écoulement dont la longueur utile est la même que celle choisie pour le mode de réalisation précédent, mais dont la hauteur est très inférieure.

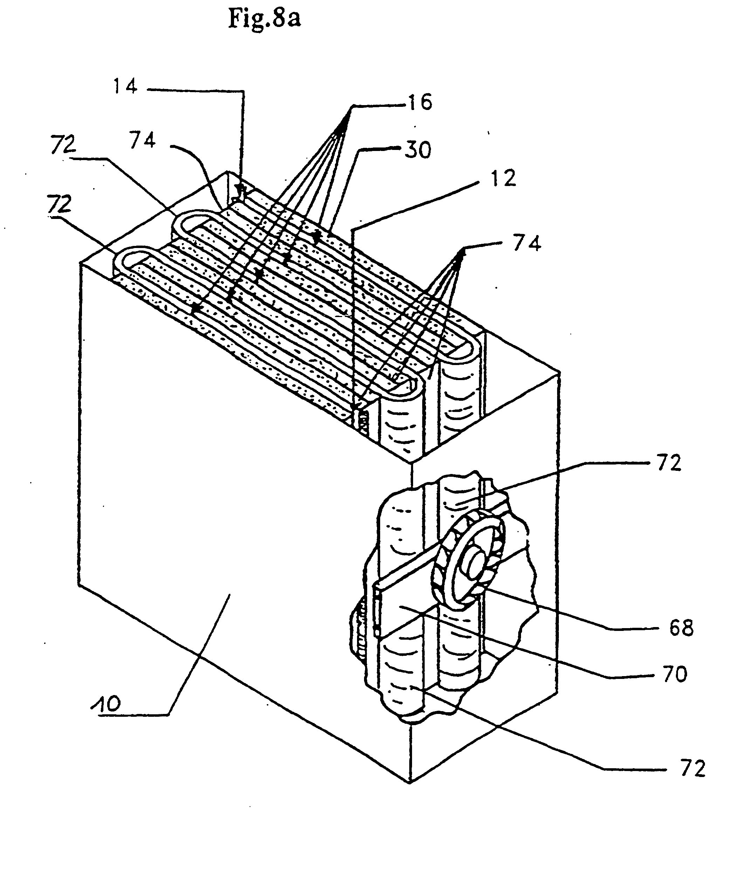

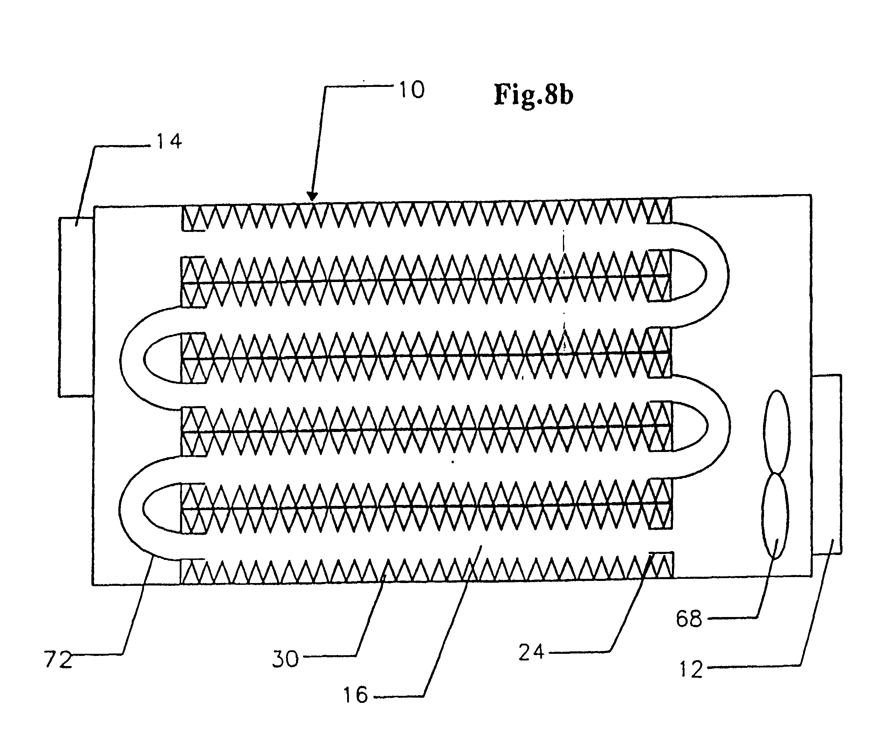

**3 f)** Un sixième mode de réalisation des troisièmes moyens additionnels de l'invention, comprenant des tissus fibreux ou des mats dont les propriétés sont décrites ci-dessus, est illustré par les figures 8a et fig. 8b. Il est constitué de modules formés de deux mats fibreux enchâssés 30 d'une épaisseur d'environ 1 cm à 2 cm, disposés horizontalement ou verticalement, espacés de 1 à 3 cm et formant un canal 16 d'environ 50 cm de haut et d'environ 50 cm de long, à travers lequel circule le flux air/gaz sous la forme d'un écoulement turbulent. Selon une forme préférée de ce mode de réalisation, représentée par une vue de dessus sur la figure 8b, les mats 30 sont plissés, les plis étant orientés perpendiculairement par rapport au sens de circulation du flux turbulent gaz/air, de manière similaire aux tamis dont l'orientation est représentée sur la figure 2. La figure 8b montre également les bords de retenue 24 disposés aux extrémités de chaque passage. Une autre particularité de ce mode de réalisation réside dans le fait que les poussières sont recueillies des deux côtés du canal traversé par le flux turbulent gaz/air. C'est pour cette raison que ce mode de réalisation est appelé collecteur à double côté; la disposition des mats collecteurs 30 ressemble à celle des électrodes collectrices dans les dépoussiéreurs électriques du type à plaques. Dans ce mode de réalisation, plusieurs modules (cinq sur la figure 8) tels que ceux décrits ci-dessus et disposés côte à côte sont connectés en série par des raccords en U 72, de telle manière que le sens de l'écoulement gaz/air varie de 180° chaque fois que l'air passe d'un module dans un autre. Le flux air/gaz chargé de poussières pénètre par l'entrée 12 et le flux air/gaz purifié est évacué par la sortie 14. Les mats enchâssés 30 sont insérés dans une structure 74, constituée de deux plaques frontales et de quatre cloisons, logée dans le boîtier 10. Le flux gaz/air est introduit au moyen du ventilateur 68 monté sur le support 70. Ce mode de réalisation est particulièrement avantageux pour des applications telles que l'épuration de l'air dans les habitations et les bureaux où l'air est peu chargé en particules, si bien que les mats fibreux ne nécessitent pas un nettoyage fréquent. Pour des unités nécessitant des rendements de récupération extrêmement élevés, on peut utiliser des mats collecteurs chargés d'électricité statiques, plissés ou plats, et/ou pour la désodorisation, on peut employer des mats contenant un adsorbant approprié, par exemple du charbon actif, en remplacement de certains mats existants. Des versions agrandies des collecteurs à double côté de ce mode de réalisation peuvent être utilisées pour l'épuration des gaz industriels. Toutefois, dans ce cas, les mats collecteurs doivent subir un nettoyage régulier par agitation ou par tout autre moyen approprié. Dans une unité d'essai comportant un canal d'écoulement 16 d'une largeur de 1,3 cm et d'une longueur utile de 2,5 m, des mats fibreux plissés 30 de 2,5 cm d'épaisseur et avec une vitesse d'écoulement de l'air de 6,5 ms⁻¹, on a pu mesurer un rendement de récupération des poussières d'essai standard ASP 200 de 92 %. Dans la même unité d'essai, avec un air circulant à la même vitesse, on a pu recueillir 100 % des poussières formées de particules d'un diamètre de 5 µm et contenues dans l'air ambiant, dans le cadre d'essais réalisés avec des mats fibreux plissés 30 d'une épaisseur de 2,5 cm et chargés d'électricité statique.

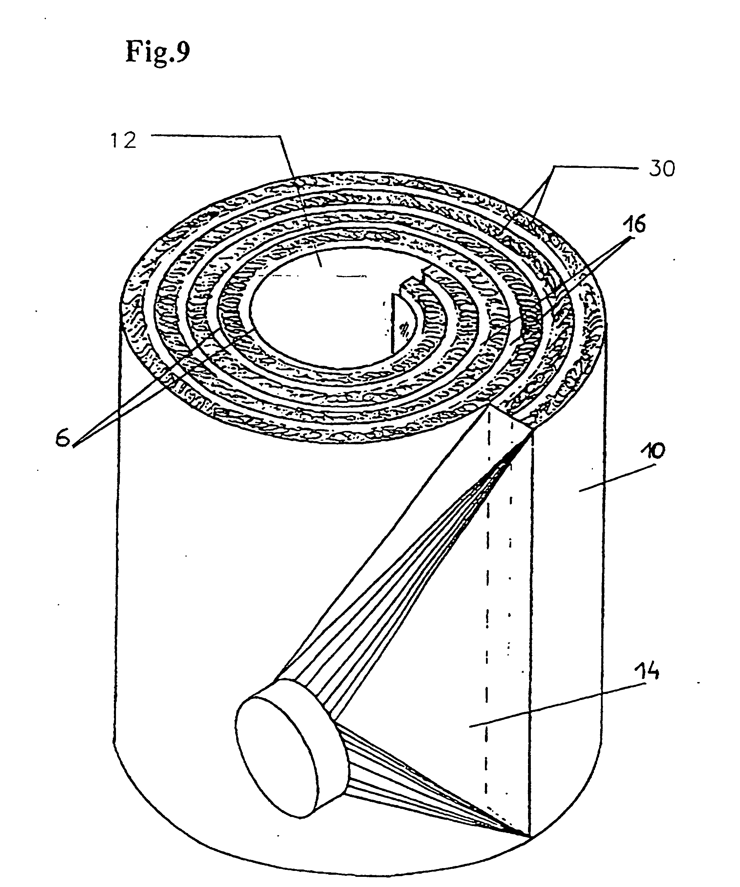

**3 g)** Le septième mode de réalisation des troisièmes nouveaux moyens de l'invention utilisant des tissus fibreux ou des mats est illustré par la figure 9. Il consiste en une configuration en spirale du mat 30 disposé sur une feuille imperméable 16. Cette feuille, sur laquelle est montée le mat, est enroulée en forme de spirale de manière à laisser un espace 16 entre deux spires consécutives, formant ainsi deux canaux de gaz parallèles 16. Le dépoussiéreur d'écoulement turbulent en spirale est placé dans un logement cylindrique 10, l'entrée 12 destinée au gaz chargé de poussières se trouvant en son centre et la sortie 14 destinée au gaz purifié étant placée tangentiellement sur la périphérie extérieure du cylindre. Le couvercle de l'unité, auquel est raccordée l'entrée, n'est pas représenté sur la figure 9. Comme on peut le voir sur cette figure, ce mode de réalisation est également très bien adapté à l'épuration de l'air dans les habitations et les bureaux, où l'air est peu chargé en poussières. L'unité ne nécessite qu'un nettoyage périodique à intervalles peu rapprochés, y compris par agitation ou par aspiration. La largeur d'un passage d'air est comprise entre environ 1 cm et 3 cm. L'épaisseur du mat est comprise entre environ 2 cm et 5 cm et la hauteur de l'unité varie entre environ 10 cm et 50 cm. L'un des avantages de cette configuration en spirale réside dans le fait qu'elle favorise l'apparition de conditions d'écoulement turbulent pour des valeurs du nombre de Reynolds inférieures (c'est-à-dire, pour un système donné, avec un gaz présentant une vitesse d'écoulement inférieure) à celles rencontrées dans un conduit droit. Des versions agrandies du dépoussiéreur d'écoulement turbulent en spirale peuvent être utilisées pour l'épuration des gaz industriels. Dans ce cas toutefois, les mats collecteurs nécessitent un nettoyage périodique par agitation ou par tout autre moyen approprié. Dans une unité d'essai comportant un canal d'écoulement 16 d'une largeur de 1,3 cm, un mat fibreux 30 d'une épaisseur de 2,5 cm, une longueur utile du canal 16 de 3 m et avec une vitesse de circulation de l'air de 2,5 ms⁻¹, on a mesuré un rendement de récupération des poussières d'essai ASP 200 de 92 %.

## Revendications

1. Méthode permettant l'élimination de particules contenues dans un courant de fluide présentant un écoulement turbulent, comprenant :
- la pénétration de tourbillons provenant d'une partie au moins dudit courant dans un mat fibreux de manière à former une couche limite visqueuse
- et la récupération desdites particules par les fibres à la surface dudit mat à la suite du déclin des tourbillons.

2. Méthode selon la revendication 1 dans laquelle l'écoulement du courant de fluide s'effectue de chaque coté de plis que présente le mat fibreux (30).

3. Méthode selon la revendication 2, dans laquelle l'écoulement du courant de fluide s'effectue perpendiculairement aux plis du mat fibreux (30).

4. Méthode selon l'une des revendications précédentes, dans lequel on charge d'électricité statique le mat (30)

5. Méthode l'une des revendications précédentes, dans laquelle on secoue et/ou on déplace le mat sur lequel sont recueillies les particules afin d'en faciliter l'élimination.

6. Méthode selon la revendication 1, dans lequel l'écoulement du courant de fluide s'effectue dans un canal (16) défini par le mat fibreux (30).

7. Méthode selon la revendication 6, dans lequel l'écoulement du courant de fluide s'effectue dans un canal (16) incliné afin de faciliter l'élimination des particules recueillies dans le mat par gravité.

8. Méthode selon la revendication 1, dans lequel l'écoulement du courant de fluide s'effectue dans un canal tubulaire (16) défini par le mat fibreux (30).

9. Méthode selon la revendication 1, dans lequel l'écoulement du courant de fluide s'effectue dans un canal (16) présentant un tracé plissé défini par le mat fibreux.

10. Méthode selon la revendication 1, dans lequel l'écoulement du courant de fluide s'effectue dans un canal (16) présentant un tracé en spirale défini par le mat fibreux.

11. Méthode selon la revendication 1, dans lequel l'écoulement du courant gazeux s'effectue avec un mat (30) présentant une porosité comprise entre 0,9 et 0,999

12. Méthode selon la revendication 1, dans lequel l'écoulement du courant gazeux s'effectue avec un mat dont les fibres (30) présentent un diamètre compris entre 0,001 mm et 0,1 mm et un espace moyen entre deux fibres voisines compris entre 0,5 mm et 2 mm.

## Patentansprüche

1. Verfahren zur Beseitigung von in einem Flüssigkeitsstrom mit turbulenter Strömung enthaltenen Partikeln, umfassend:
a. das Eindringen von in mindestens einem Teil des besagten Flüssigkeitsstroms entstehenden Wirbeln in eine faserstoffhaltige Matte, um eine viskose Grenzschicht zu erzeugen
b. sowie die Rückgewinnung der besagten Partikel über die Fasern an der Oberfläche der besagten Matte nach dem Abnehmen der Wirbel.

2. Verfahren nach Anspruch 1, bei welchem die Strömung von jeder Lagenseite der faserstoffhaltigen Matte (30) aus erfolgt.

3. Verfahren nach Anspruch 2, bei welchem die Strömung rechtwinklig zu den Lagen der faserstoffhaltigen Matte (30) erfolgt.

4. Verfahren nach einem der vorhergehenden Ansprüche, bei welchem man die Matte (30) elektrostatisch auflädt.

5. Verfahren nach einem der vorhergehenden Ansprüche, bei welchem man die Matte, auf welcher die Partikel gesammelt werden, schüttelt und/oder verschiebt, um die Beseitigung der Partikel zu erleichtern.

6. Verfahren nach Anspruch 1, bei welchem die Strömung des Flüssigkeitsstromes in einem durch die faserstoffhaltige Matte (30) begrenzten Kanal (16) erfolgt.

7. Verfahren nach Anspruch 6, bei welchem die Strömung des Flüssigkeitsstromes in einem geneigten Kanal (16) erfolgt, um die Beseitigung der in der Matte gesammelten Partikel durch die Schwerkraft zu erleichtern.

8. Verfahren nach Anspruch 1, bei welchem die Strömung des Flüssigkeitsstromes in einem röhrenförmigen Kanal (16) erfolgt, welcher durch die faserstoffhaltige Matte (30) begrenzt ist.

9. Verfahren nach Anspruch 1, bei welchem die Strömung des Flüssigkeitsstromes in einem Kanal (16) erfolgt, welcher einen gefalteten, durch die faserstoffhaltige Matte (30) begrenzten Verlauf aufweist.

10. Verfahren nach Anspruch 1, bei welchem die Strömung des Flüssigkeitsstromes in einem Kanal (16) erfolgt, welcher einen spiralförmigen, durch die faserstoffhaltige Matte (30) begrenzten Verlauf aufweist.

11. Verfahren nach Anspruch 1, bei welchem die Strömung des Gasstromes mit einer eine zwischen 0,9 und 0,999 liegenden Porosität aufweisenden Matte (30) erfolgt.

12. Verfahren nach Anspruch 1, bei welchem die Strömung des Gasstromes mit einer Matte erfolgt, deren Fasern (30) einen zwischen 0,001 mm und 0,1 m liegenden Durchmesser sowie einen zwischen 0,5 mm und 2 mm liegenden mittleren Abstand zwischen zwei benachbarten Fasern aufweisen.

## Claims

1. Method permitting the removal of particles contained in a stream of fluid exhibiting turbulent flow, comprising:
- penetration of vortices emanating from at least one portion of said stream in a fibrous mat so as to form a viscous boundary layer;
- and recovery of said particles by the fibres on the surface of said mat after the vortices have decayed.

2. Method according to claim 1, in which the flow of the stream of fluid takes place on either side of folds exhibited by the fibrous mat (30).

3. Method according to claim 2, in which the flow of. the stream of fluid takes place perpendicularly to the folds of the fibrous mat (30).

4. Method according to one of the preceding claims, in which the mat (30) is charged with static electricity.

5. Method according to one of the preceding claims, in which the mat on which the particles are collected is shaken and/or moved in order to facilitate their removal.

6. Method according to claim 1, in which the flow of the stream of fluid takes place in a channel (16) defined by the fibrous mat (30).

7. Method according to claim 6, in which the flow of the stream of fluid takes place in a channel (16) which is inclined in order to facilitate the removal of the particles collected in the mat through gravity.

8. Method according to claim 1, in which the flow of the stream of fluid takes place in a tubular channel (16) defined by the fibrous mat (30).

9. Method according to claim 1, in which the flow of the stream of fluid takes place in a channel (16) exhibiting a folded path defined by the fibrous mat.

10. Method according to claim 1, in which the flow of the stream of fluid takes place in a channel (16) exhibiting a spiral path defined by the fibrous mat.

11. Method according to claim 1, in which the flow of the stream of gas takes place with a mat (30) exhibiting a porosity of between 0.9 and 0.999.

12. Method according to claim 1, in which the flow of the stream of gas takes place.with a mat the fibres (30) of which exhibit a diameter of between 0.001 mm and 0.1 mm and a mean space between two neighbouring fibres of between 0.5 mm and 2 mm.
